# EUROPÄISCHE PATENTSCHRIFT

(11) **EP 2 385 232 B1**
(45) Veröffentlichungstag und Bekanntmachung des Hinweises auf die Patenterteilung: **23.05.2012**
(21) Anmeldenummer: 11003578.9
(22) Anmeldetag: 02.05.2011
(51) Int. Cl.: F02C 6/00, B01D 45/14

(54) **Fliehkraft-Ölabscheider für ein Flugzeugtriebwerk**
Centrifugal oil separator for an aircraft engine
Séparateur d'huile centrifuge pour un moteur d'aéronef

(30) Priorität: 06.05.2010 DE 102010019605
(43) Veröffentlichungstag der Anmeldung: 09.11.2011
(73) Patentinhaber: Rolls-Royce Deutschland Ltd & Co KG, 15827 Blankenfelde-Mahlow (DE)
(72) Erfinder: Angst, Robert, Dr., 13347 Berlin (DE)
(74) Vertreter: Weber, Joachim

(56) Entgegenhaltungen:
- EP-A2- 1 297 879
- DE-A1- 3 605 619
- DE-A1-102006 058 343
- DE-C2- 2 604 180

## Beschreibung

Die Erfindung betrifft einen Fliehkraft-Ölabscheider für ein Flugzeugtriebwerk zur Abscheidung der in der Entlüftungsluft enthaltenen Ölpartikel, der einen rotierenden Hohlkörper mit einem in diesem angebrachten Metallschaumkörper und mindestens eine stromauf des Metallschaumkörpers angeordnete Hochspannungselektrode umfasst.

Zur Vermeidung eines erhöhten Luftdrucks im Öltank, dem Getriebe und den Lagerkammern ist in das Schmiersystem eines Triebwerks eine Entlüftung integriert. Die von den Lagerkammern und dem Getriebe des Flugzeugtriebwerks abgeführte Luft enthält jedoch Ölpartikel, die vor der Weiterleitung in die Atmosphäre möglichst vollständig aus dem Luftstrom abgetrennt werden müssen, um einerseits die Ölverluste und die nachteiligen Folgen eines hohen Ölverbrauchs gering zu halten und andererseits die negativen Wirkungen von nach außen abströmender Luft mit hohem Ölanteil zu minimieren.

Zum Abtrennen des Ölanteils in der Luft werden auf der Wirkung der Zentrifugalkraft beruhende Ölabscheider eingesetzt, deren Wirkung durch eine in den Zentrifugal-Ölabscheider integrierte und mit diesem rotierende Metallschaumstruktur noch verbessert werden kann.

Zur weiteren Erhöhung der Wirkung der Metallschaumstruktur auf den Grad der Abscheidung schlägt die DE 102006058343A1 stromauf der Metallschaumstruktur die Anordnung mindestens einer Hochspannungssprühelektrode vor. Durch die von den Hochspannungssprühelektroden ausgehenden elektrostatischen Kräfte werden die Luftmoleküle negativ aufgeladen. Dieser Ladungsüberschuss wird an die

Ölpartikel abgegeben, die sich aufgrund der elektrostatischen Anziehung an die Oberfläche der eine geringere Ladung aufweisenden - geerdeten - Metallschaumstruktur anlegen, so dass sich auch sehr kleine Ölpartikel mit geringer Masse an die Oberflächen der Metallschaumstruktur anlegen und aus dem Luftstrom abgetrennt werden können.

Aus der DE 36 05 619 A1 ist ein Zentrifugal-Ölabscheider gemäß dem Oberbegriff des Anspruches 1 vorbekannt, bei welchem die Metallschaumstruktur in eine hohl ausgebildete Triebwerkswelle integriert ist.

Die bekannten Zentrifugal-Ölabscheider der oben erwähnten Art sind als separat angeordnete Aggregate ausgebildet und daher wegen des dadurch bedingten Gewichts und des Platzbedarfs nachteilig.

Der Erfindung liegt die Aufgabe zugrunde, einen Zentrifugal-Ölabscheider für ein Flugzeugtriebwerk einfach und mit geringem Raum- und Gewichtsaufwand auszubilden und dennoch einen hohen Abscheidegrad zu gewährleisten.

Erfindungsgemäß wird die Aufgabe mit einem gemäß den Merkmalen des Patentanspruchs 1 ausgebildeten Fliehkraft-Ölabscheider gelöst.

Vorteilhafte Weiterbildungen der Erfindung sind Gegenstand der Unteransprüche.

Der Grundgedanke der Erfindung besteht darin, dass der Metallschaumkörper in eine hohl ausgebildete Triebwerkswelle mit in dieser im Bereich des Metallschaumkörpers vorgesehenen, in einen Sammelkanal mündenden Ölaustrittsbohrungen integriert ist. Stromauf des Metallschaumkörpers in der Triebwerkswelle vorgesehene Lufteintrittsöffnungen münden in eine am Umfang der Triebwerkswelle statisch angeordnete, an Entlüftungsluftzuleitungen angeschlossene Entlüftungsluftkammer, in der an einen Hochspannungsgenerator angeschlossenen Hochspannungselektroden angeordnet sind. Die in der Entlüftungsluft enthaltenen Öltröpfchen werden außerhalb des Hohlkörpers, das heißt vor der Zuführung in die Triebwerkswelle, in einer Entlüftungsluftkammer elektrostatisch aufgeladen. Beim Durchströmen des Metallschaumkörpers werden auch feinste Ölpartikel aufgrund der gegenüber dem Metallschaum höheren Ladung an die Wände des Metallschaumkörpers angezogen und im Wesentlichen vollständig aufgrund der Fliehkraftwirkung radial ausgetragen, während die gereinigte Luft axial weiterströmt und über Luftauslässe in der Triebwerksgondel ins Freie gelangt, und zwar ohne eine Ölnebelfahne zu hinterlassen und die Triebwerksgondel oder das Flugzeug zu verschmutzen oder gesundheitliche Schäden zu verursachen. Der platzsparend und mit geringem Gewicht ausgebildete Ölabscheider kann zudem mit geringem Aufwand montiert werden. Ältere Triebwerksmodelle können mit dem vorgeschlagenen Ölabscheider nachgerüstet werden.

Der Metallschaumkörper füllt den freien Querschnitt der Triebwerkswelle vollständig aus und ist über die Triebwerkswelle geerdet, so dass dessen Ladung geringer als die der elektrostatisch geladenen Ölpartikel ist.

In Ausgestaltung der Erfindung wird als Metallschaumkörper ein unter dem Handelsnamen Retimet® bekannter Metallschaum verwendet.

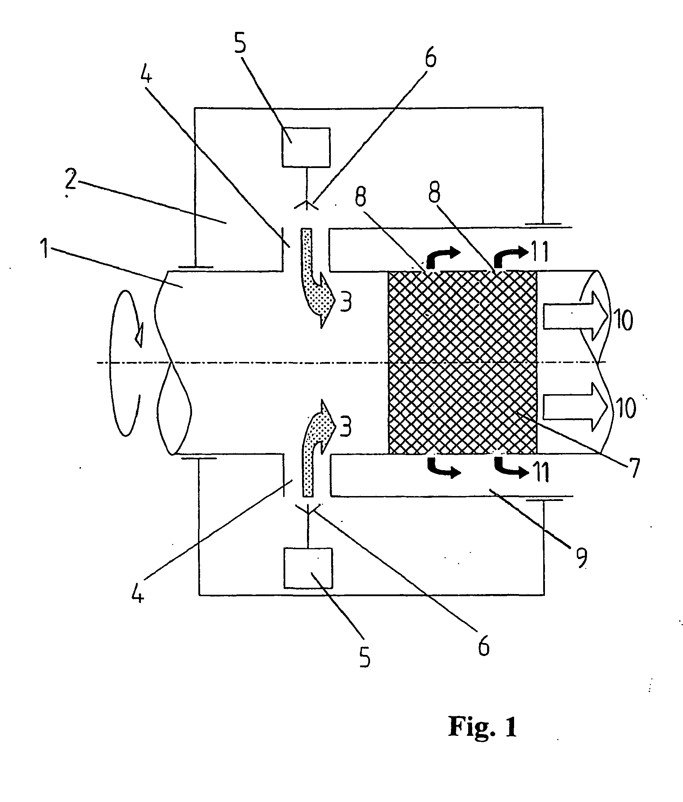

Ein Ausführungsbeispiel der Erfindung wird anhand der Zeichnung, in deren einziger Figur ein in eine Hohlwelle integrierter Fliehkraft-Ölabscheider schematisch dargestellt ist, näher erläutert.

Die vom Öltank, vom Getriebe und von Lagerkammern des Triebwerks abgeführte, mit Ölpartikeln vermischte Entlüftungsluft gelangt in eine am Umfang einer hohl ausgebildeten Triebwerkswelle 1 statisch angeordnete Entlüftungsluftkammer 2. Der Entlüftungsluftstrom 3 strömt über in der Triebwerkswelle 1 vorgesehene Lufteintrittsöffnungen 4 in die mit hoher Geschwindigkeit rotierende Triebwerkswelle 1. In der Entlüftungsluftkammer 2 befinden sich - hier vor den Lufteintrittsöffnungen 4 angeordnete - mit einem Hochspannungsgenerator 5 verbundene Hochspannungselektroden 6, durch die die Öltröpfchen im Entlüftungsluftstrom 3 elektrostatisch aufgeladen werden. Nachdem bereits größere Öltröpfchen durch die Zentrifugalkräfte aus dem Entlüftungsluftstrom 3 abgeschieden wurden, werden in einem in der Triebwerkswelle 1 angebrachten und deren Querschnittsfläche ausfüllenden Metallschaumkörper 7 aufgrund der vielfältigen Umlenkungen weitere Öltröpfchen, insbesondere auch kleinere Öltröpfchen aus dem Entlüftungsluftstrom 3 abgetrennt, die sich aufgrund der durch die Hochspannungselektroden 6 bewirkten elektrostatischen Aufladung an die Wände des über die Triebwerkswelle 1 geerdeten Metallschaumkörpers 7 anlegen und durch die Fliehkräfte an den Rand des Metallschaumkörpers 7 gelangen und über Ölaustrittsbohrungen 8 in der Triebwerkswelle 1 in einen die Triebwerkswelle 1 umgebenden Sammelkanal 9 ausgetragen werden. Das auf diese Art aus der Entlüftungsluft abgeschiedene Öl 11 wird aus dem Sammelkanal 9 abgesaugt und zur erneuten Nutzung in den Schmieröltank des Triebwerks (nicht dargestellt) zurückgeführt, während die gereinigte Entlüftungsluft 10 axial aus dem Metallschaumkörper 7 abströmt und über Luftauslässe nicht dargestellt) ins Freie abströmt.

Obwohl aufgrund der platzsparenden Anordnung des Metallschaumkörpers 7 in der Triebwerkswelle 1 und deren vergleichsweise kleinem Radius die Zentrifugalkräfte begrenzt und in der Rotationsachse sogar Null sind, ist der Abscheidegrad infolge der Anziehung auch feinster - elektrostatisch geladener - Öltröpfchen an den Metallschaumkörper 7 derart hoch, dass im Wesentlichen ölfreie Luft nach außen gelangt, die weder zu gesundheitlichen Schäden durch Einatmen oder Hautkontakt führt noch einen sichtbaren rauchartigen und zu Verschmutzungen an der Außenseite der Triebwerksgondel bzw. des Flugzeugs führenden Ölnebel darstellt. Der zuvor beschriebene elektrostatische Zusatz für einen Fliehkraft-Ölabscheider zeichnet sich zudem durch einen geringen Montageaufwand und ein geringes Gewicht sowie die Möglichkeit der Nachrüstung älterer Triebwerksmodelle aus. In bestimmten Flugphasen kann es auch wünschenswert sein, die Ölabscheidung aus der Entlüftungsluft zu begrenzen, das heißt den Abscheidegrad zu verringern. In diesem Fall wird die Spannungszufuhr zu den Hochspannungselektroden 6 unterbrochen.

### Bezugszeichenliste

- 1: Triebwerkswelle
- 2: Entlüftungsluftkammer
- 3: Entlüftungsluftstrom, Luft-Öl-Gemisch
- 4: Lufteintrittsöffnungen in 1
- 5: Hochspannungsgenerator
- 6: Hochspannungselektroden
- 7: Metallschaumkörper
- 8: Ölaustrittsbohrungen in 1
- 9: Sammelkanal
- 10: gereinigte Entlüftungsluft
- 11: Öl

## Patentansprüche

1. Fliehkraft-Ölabscheider für ein Flugzeugtriebwerk zur Abscheidung der in der Entlüftungsluft enthaltenen Ölpartikel, der einen rotierenden Hohlkörper mit einem in diesem angebrachten Metallschaumkörper (7) und mindestens eine stromauf des Metallschaumkörpers angeordnete Hochspannungselektrode (6) umfasst, wobei der Metallschaumkörper (7) in eine hohl ausgebildete Triebwerkswelle (1) integriert ist, **dadurch gekennzeichnet, dass** in der Triebwerkswelle (1) im Bereich des Metallschaumkörpers (7) in einen Sammelkanal (9) mündende Ölaustrittsbohrungen (8) vorgesehen sind, wobei stromauf des Metallschaumkörpers (7) in der Triebwerkswelle (1) vorgesehene Lufteintrittsöffnungen (4) in eine am Umfang der Triebwerkswelle (1) statisch angeordnete, an Entlüftungsluftzuleitungen angeschlossene Entlüftungsluftkammer (2) münden, in der die an einen Hochspannungsgenerator (5) angeschlossenen Hochspannungselektroden (6) angeordnet sind.

2. Fliehkraft-Ölabscheider nach Anspruch 1, **dadurch gekennzeichnet, dass** der über die Triebwerkswelle (1) geerdete Metallschaumkörper (7) den freien Querschnitt der Triebwerkswelle (1) vollständig ausfüllt.

## Claims

1. Centrifugal oil separator for an aircraft engine for separating the oil particles contained in the vent air, with the oil separator including a rotating hollow body with a metallic foam body (7) attached therein and at least one high-voltage electrode (6) arranged upstream of the metallic foam body, with the metallic foam body (7) being integrated into a hollow-type engine shaft (1), **characterized in that** oil exit holes (8) are provided in the engine shaft (1) in the area of the metallic foam body (7) which issue into a collecting channel (9), with air inlet openings (4) arranged upstream of the metallic foam body (7) in the engine shaft (1) issuing into a vent air chamber (2) which is statically arranged on the circumference of the engine shaft (1) and connected to vent air inlet lines and in which the high-voltage electrodes (6) connected to a high-voltage generator (5) are arranged.

2. Centrifugal oil separator in accordance with Claim 1, **characterized in that** the metallic foam body (7), which is earthed via the engine shaft (1), completely fills the free cross-section of the engine shaft (1).

## Revendications

1. Déshuileur centrifuge pour un moteur d'avion, destiné à séparer les particules d'huile contenues dans l'air de purge, sachant que le déshuileur comprend un corps creux rotatif dans lequel est placée une structure en mousse métallique (7) et au moins une électrode à haute tension (6) disposée en amont de la structure en mousse métallique, que la structure en mousse métallique (7) est intégrée dans un arbre de moteur (1) creux, **caractérisé en ce qu'**à l'intérieur de l'arbre de moteur (1) dans la zone du corps en mousse métallique (7) sont prévus des perçages de sortie d'huile (8) débouchant dans un canal collecteur (9), sachant que des orifices d'entrée d'air (4) prévus en amont du corps en mousse métallique (7) dans l'arbre de moteur (1) débouchent dans une chambre d'air de purge (2) disposée statiquement sur une circonférence de l'arbre de moteur (1), reliée à des conduites d'air de purge et dans laquelle sont placées les électrodes à haute tension (6) raccordées à une génératrice à haute tension (5).

2. Déshuileur centrifuge selon la revendication n° 1, **caractérisé en ce que** le corps en mousse métallique (7) mis à la terre par l'intermédiaire de l'arbre de moteur (1) remplit complètement la section libre de l'arbre de moteur (1).
